# EUROPÄISCHE PATENTSCHRIFT

(11) **EP 3 497 331 B1**
(45) Veröffentlichungstag und Bekanntmachung des Hinweises auf die Patenterteilung: **25.03.2020**
(21) Anmeldenummer: 17751329.8
(22) Anmeldetag: 31.07.2017
(51) Int. Cl.: F04B 23/02, F15B 11/08, F15B 15/18, B30B 15/16

(54) **BEARBEITUNGSMASCHINE**
MACHINE TOOL
MACHINE D'USINAGE

(30) Priorität: 08.08.2016 DE 102016114635
(43) Veröffentlichungstag der Anmeldung: 19.06.2019
(73) Patentinhaber: HAWE Altenstadt Holding GmbH, 86972 Altenstadt (DE)
(72) Erfinder: RAUWOLF, Martin, 86956 Schongau (DE); RUSS, Bernhard, 86971 Peiting (DE); SOCHER, Andreas, 86972 Altenstadt (DE)
(74) Vertreter: Grosse Schumacher Knauer von Hirschhausen
(86) Internationale Anmeldenummer: PCT/EP2017/069273
(87) Internationale Veröffentlichungsnummer: WO 2018/029019

(56) Entgegenhaltungen:
- CN-B- 104 564 865
- CN-U- 201 836 150
- CN-U- 202 971 412
- CN-U- 204 386 973
- DE-A1- 3 027 284
- DE-A1-102006 021 682
- DE-B3-102012 015 118
- DE-U1-202013 101 055
- DE-U1-202015 106 161
- JP-A- 2001 304 205
- JP-A- 2003 113 811
- JP-A- 2004 257 449
- JP-A- 2008 256 029
- KR-A- 20010 070 715

## Beschreibung

Die vorliegende Erfindung betrifft, wie im Oberbegriff des Anspruchs 1 angegeben, eine Bearbeitungsmaschine mit mindestens einem im Wesentlichen vertikal auf und ab bewegbaren Werkzeug, auf das mindestens eine elektrohydraulische Antriebseinheit wirkt, umfassend eine stehend orientierte, doppeltwirkende hydraulische Zylinder-Kolben-Anordnung mit einem nach unten aus dem Zylinder herausragenden, mit dem Werkzeug gekoppelten Kolben, einen Hydraulikflüssigkeitsbehälter, eine Motor-Pumpe-Einheit mit einem Elektromotor und einer von diesem angetriebenen Hydraulikpumpe und ein am oberen Endbereich des Zylinders an dem Zylinder angeflanschten Ventilblock mit einem Nachsaugventil.

Bearbeitungsmaschinen der vorstehenden, gattungsgemäßen Art sind für diverse Anwendungszwecke in unterschiedlichsten Ausführungen bekannt. Ein typisches Anwendungsgebiet sind Pressen verschiedenster Funktion (z. B. Abkantpressen, Richtpressen, Umformpressen, Pulverpressen, etc.). Über das Nachsaugventil wird dabei der dem Pressen dienende Arbeitsraum der hydraulischen Zylinder-Kolben-Anordnung beim Absenken des Werkzeugs im sogenannten Eilgang, d. h. vor dem eigentlichen aktiven Pressen befüllt, wobei zum Absenken des Werkzeugs im Eilgang insbesondere ein gesonderter Antrieb (z. B. eine hydraulische Zylinder-Kolben-Anordnung mit vergleichsweise geringem Kolbenquerschnitt) oder aber die Schwerkraft genutzt werden kann. Der einschlägige Stand der Technik wird beispielsweise repräsentiert durch die WO 01/53016 A1, US 6959581 B2, CN 204725877 U, EP 1228822 B1, EP 1232810 B1, DE 102012015118 B3 und DE 202015106161 U1. Dokument DE 102012015118 B3 offenbart eine Bearbeitungsmaschine gemäß dem Oberbegriff des Anspruchs 1.

Die vorliegende Erfindung hat sich zum Ziel gesetzt, eine hinsichtlich der Praxistauglichkeit gegenüber dem Stand der Technik verbesserte Bearbeitungsmaschine der gattungsgemäßen Art bereitzustellen.

Gelöst wird diese Aufgabenstellung gemäß einer Bearbeitungsmaschine mit den Merkmalen des Anspruchs 1, indem an den Ventilblock an einer ersten hydraulischen Schnittstelle der Hydraulikflüssigkeitsbehälter und an einer zweiten hydraulischen Schnittstelle die Hydraulikpumpe angeflanscht sind, wobei sich eine Saugleitung, über die die Hydraulikpumpe im Pumpbetrieb Hydraulikflüssigkeit aus dem Hydraulikflüssigkeitsbehälter ansaugt, von der ersten hydraulischen Schnittstelle zur zweiten hydraulischen Schnittstelle durch den Ventilblock hindurch erstreckt, wobei die Saugleitung abschnittsweise identisch ist mit einer den Ventilblock durchsetzenden, den Hydraulikflüssigkeitsbehälter mit einem kolbenseitigen Arbeitsraum der doppeltwirkenden hydraulischen Zylinder-Kolben-Anordnung verbindenden Nachsaugleitung. Durch diese, erfindungsgemäße Ausführung der Bearbeitungsmaschine ergeben sich mehrere Vorteile mit ganz erheblicher Praxisrelevanz. Hierzu zählt insbesondere die Möglichkeit einer besonders kompakten Bauweise; in Anwendung der vorliegenden Erfindung lassen sich nämlich Bearbeitungsmaschinen der gattungsgemäßen Art konzipieren, bei denen die mindestens eine elektrohydraulische Antriebseinheit einen besonders geringen Bauraum benötigt. Insoweit kommt unter anderem zum Tragen, dass für die saugseitige strömungstechnische Verbindung der Hydraulikpumpe mit dem Hydraulikflüssigkeitsbehälter durch den Ventilblock hindurch abschnittsweise eine ohnehin vorhandene, typischerweise mit einem vergleichsweise großen Querschnitt dimensionierte Hydraulikleitung genutzt wird, nämlich die (auch das Nachsaugventil umfassende) Nachsaugleitung, über die ein kolbenseitiger Arbeitsraum der doppeltwirkenden hydraulischen Zylinder-Kolben-Anordnung mit dem Hydraulikflüssigkeitsbehälter verbunden ist. Durch die erfindungsgemäße abschnittsweise Nutzung einer hydraulischen Verbindungsleitung für mehrere Zwecke lässt sich der erforderliche Bauraum minimieren, wobei von der Doppelnutzung sogar zusätzlich die Funktionssicherheit profitiert; denn die Nachsaugleitung weist regelmäßig einen besonders großen Querschnitt auf, der typischerweise nennenswert größer ist als der Mindestquerschnitt der Saugleitung, über die die Hydraulikpumpe im Pumpbetrieb Hydraulikflüssigkeit aus dem Hydraulikflüssigkeitsbehälter ansaugt. Weiterhin begünstigt die erfindungsgemäße Ausführung der Bearbeitungsmaschine, indem diese sich durch das Anflanschen des Hydraulikflüssigkeitsbehälters sowie der Hydraulikpumpe an den Ventilblock an einer ersten und einer zweiten hydraulischen Schnittstelle auszeichnet, eine baukastenartige Konfiguration der jeweiligen Antriebseinheit durch Kombination spezifischer Tank-, Ventilblock- und Pumpen-Module. Hierdurch lassen sich Bearbeitungsmaschinen mit mindestens einer auf einfache und kostengünstige Weise auf die jeweilige Anwendungsumgebung abgestimmten, ideal an diese angepassten (z. B. im Hinblick auf Funktion und Einbauraum optimierten) elektrohydraulischen Antriebseinheit bereitstellen. Weitere aus der vorliegenden Erfindung resultierende Vorteile werden aus deren nachfolgender Erläuterung ersichtlich.

In bevorzugter Weiterbildung der vorliegenden Erfindung liegen - bei typischen Einbausituationen für die mindestens eine elektrohydraulische Antriebseinheit - die erste und die zweite hydraulische Schnittstelle einander dergestalt gegenüber, dass der Hydraulikflüssigkeitsbehälter und die Hydraulikpumpe einander gegenüberliegend an den Ventilblock angeflanscht sind, oder aber sind der Hydraulikflüssigkeitsbehälter und die Hydraulikpumpe über Eck an den Ventilblock angeflanscht. Bei Vorliegen einer atypischen Einbausituation kann sich allerdings im Einzelfall auch eine hiervon abweichende Platzierung des Hydraulikflüssigkeitsbehälters und der Hydraulikpumpe relativ zum Ventilblock als vorteilhaft erweisen.

Eine andere bevorzugte Weiterbildung der Erfindung zeichnet sich dadurch aus, dass die erste Schnittstelle als SAE-Flansch ausgeführt ist. Dies ermöglicht im Einzelfall, den Hydraulikflüssigkeitsbehälter entfernt von dem Ventilblock zu platzieren, wobei in diesem Falle an die erste hydraulische Schnittstelle des Ventilblocks standardmäßig ein in dem Hydraulikflüssigkeitsbehälter mündender Saugschlauch angeschlossen werden kann.

In Umsetzung der vorliegenden Erfindung lässt sich realisieren, dass die maximale Bauhöhe der Motor-Pumpe-Einheit und die maximale Bauhöhe des Hydraulikflüssigkeitsbehälters die Bauhöhe des Ventilblocks nicht übersteigen. Dies ist für die Praxistauglichkeit der erfindungsgemäßen Bearbeitungsmaschine von ganz besonderem Vorteil; denn die Bauhöhe der Bearbeitungsmaschine ist oft - beispielsweise bei dem Transport der Maschine vom Hersteller zum Anwender und bei der Installation der Bearbeitungsmaschine bei diesem - ein kritischer Faktor.

Gemäß einer abermals anderen bevorzugten Weiterbildung der Erfindung sind weitere, von einer Maschinensteuerung ansteuerbare Hydraulikventile in dem Ventilblock untergebracht. Dies ist günstig im Hinblick auf eine besonders kompakte Ausführung der mindestens einen elektrohydraulischen Antriebseinheit. Zudem kann die Effizienz der Bearbeitungsmaschine von den in diesem Falle realisierbaren besonders kurzen und somit verlustarmen Hydraulikleitungen profitieren. Auf der anderen Seite können indessen die Vorteile einer alternativen bevorzugten Weiterbildung überwiegen, die sich dadurch auszeichnet, dass an den Ventilblock an einer dritten hydraulischen Schnittstelle ein Funktionsblock mit weiteren, von einer Maschinensteuerung ansteuerbaren Hydraulikventilen angeflanscht ist. Hier kann die weiter oben bereits angesprochene, mit besonderen Vorteilen verbundene Baukasten-Konzeption optimal auf die Gesamtheit der elektrohydraulischen Antriebseinheit erstreckt werden, indem der die von einer Maschinensteuerung ansteuerbaren Hydraulikventile umfassende Funktionsblock ein weiteres Modul bildet, das beliebig mit den weiteren Modulen (s. o.) kombinierbar ist. Weiterhin ist denkbar, alle oder zumindest einen Teil der von einer Maschinensteuerung ansteuerbaren Hydraulikventile in dem Pumpengehäuse der Hydraulikpumpe unterzubringen.

Im Hinblick auf die möglichst freie und flexible Konfigurierbarkeit einer individuell an die maschinentechnische Anwendungsumgebung angepassten elektrohydraulischen Antriebseinheit kann weiterhin vorteilhaft sein, wenn der Ventilblock in mehreren unterschiedlichen, beispielsweise in zwei zueinander um 180° verdrehten Winkelpositionen auf dem Zylinder der hydraulischen Zylinder-Kolben-Einheit montierbar ist.

In bevorzugter Weiterbildung der vorliegenden Erfindung ist bei typischen Einbausituationen für die mindestens eine elektrohydraulische Antriebseinheit die Motor-Pumpe-Einheit - mit waagerechter Achse des neben der Hydraulikpumpe angeordneten Elektromotors - liegend oder aber - mit senkrechter Achse des unterhalb der Hydraulikpumpe angeordneten Elektromotors - stehend orientiert. Beide Konzeptionen erlauben, die Bauhöhe der Bearbeitungsmaschine niedrig zu halten, indem die maximale Bauhöhe der Motor-Pumpe-Einheit die Bauhöhe des Ventilblocks nicht übersteigt (s. o.). Im Übrigen weist die Motor-Pumpe-Einheit, gemäß einer wiederum anderen bevorzugten Weiterbildung, einen zwischen dem Pumpengehäuse der Hydraulikpumpe und dem Elektromotor angeordneten spezifischen Adapterflansch auf. Ein solcher, gesonderter Adapterflansch ist insbesondere von Vorteil im Hinblick auf die Möglichkeit, zur individuellanwendungsspezifischen, baukastenartigen Konfiguration der jeweiligen Motor-Pumpe-Einheit verschiedene Hydraulikpumpen und Elektromotoren frei miteinander zu kombinieren.

In abermals bevorzugter Weiterbildung der Erfindung weist die elektrohydraulische Antriebseinheit einen Druckfilter auf, der kontinuierlich druckseitig die durch die Hydraulikpumpe geförderte Hydraulikflüssigkeit reinigt. Dies wirkt sich positiv auf die Funktionssicherheit aus.

Im Folgenden wird die vorliegende Erfindung anhand eines in der Zeichnung - nur in dem hier interessierenden Umfang - veranschaulichten bevorzugten Ausführungsbeispiels näher erläutert. Dabei zeigt
- Fig. 1: von einer erfindungsgemäß ausgeführten Bearbeitungsmaschine in Form einer zwei elektrohydraulische Antriebseinheiten aufweisenden Abkantpresse den rechten-oberen Eckbereich in perspektivischer Darstellung,
- Fig. 2: in vergrößerter Ansicht die bei der Abkantpresse nach Fig. 1 eingesetzte elektrohydraulische Antriebseinheit und
- Fig. 3: in schematischer Ansicht einen Schnitt durch die Antriebseinheit nach Fig. 2.

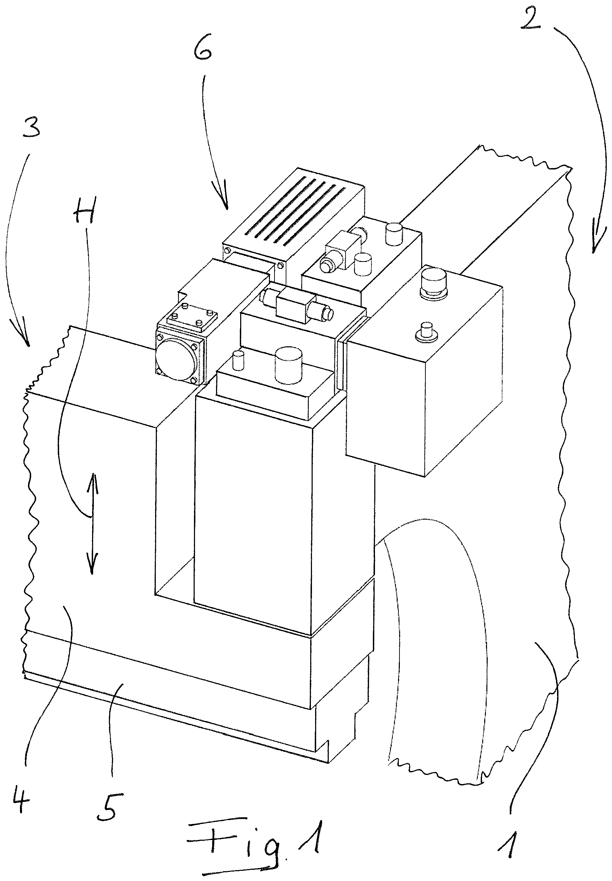

Die in der Zeichnung veranschaulichte, als Abkantpresse ausgeführte Bearbeitungsmaschine weist in als solches bekannter Weise ein zwei C-Rahmen 1 umfassendes Maschinengestell 2 auf. In fester räumlicher Beziehung zu dem Maschinengestell 2, nämlich jeweils an einem unteren Profilschenkel der beiden C-Rahmen 1 fixiert, ist an diesem ein (nicht gezeigtes) unteres Werkzeug (umfassend einen unteren Werkzeugträger und einen auswechselbar daran angebrachten unteren Werkzeugaufsatz) angeordnet. Ein oberes Werkzeug 3 (umfassend einen oberen Werkzeugträger 4 und einen auswechselbar daran angebrachten oberen Werkzeugaufsatz 5) ist relativ zu dem unteren Werkzeugträger um einen Betriebshub H linear vertikal auf und ab verfahrbar; hierzu ist an jedem der beiden C-Rahmen (stirnseitig an einem oberen Profilschenkel) eine elektrohydraulische Antriebseinheit 6 angebracht. In Fig. 1 ist das obere Werkzeug 3 in seiner obersten, maximal angehobenen Stellung gezeigt. Da die in der Zeichnung gezeigte Abkantpresse in diesem Umfang dem hinlänglich bekannten Stand der Technik entspricht, sind weitere Erläuterungen insoweit entbehrlich; vielmehr wird auf den einleitend spezifizierten Stand der Technik verwiesen, wobei der gesamte Gehalt der genannten Veröffentlichungen durch Bezugnahme zum Inhalt der vorliegenden Patentanmeldung gemacht wird.

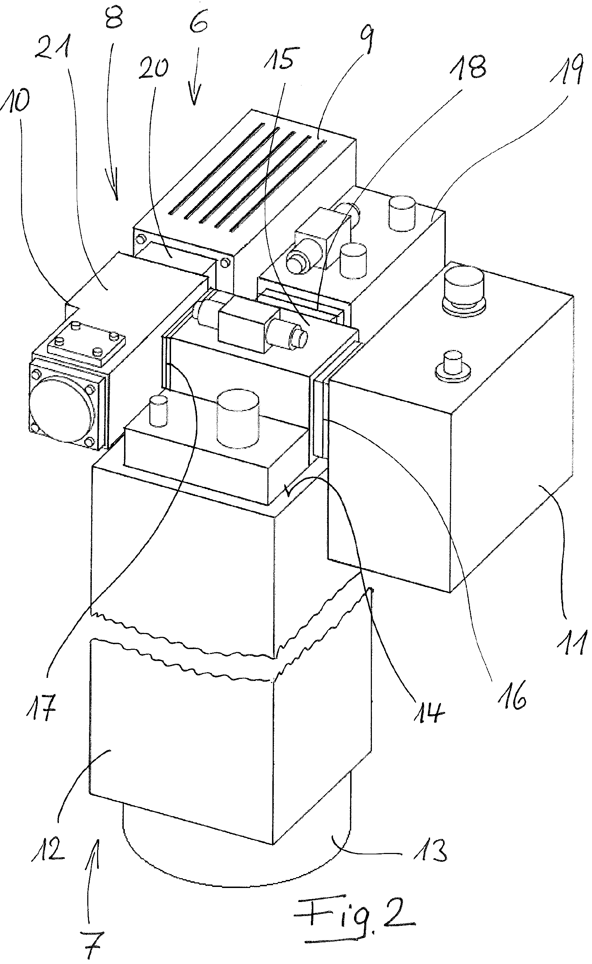

Nach der Zeichnung, insbesondere deren Fig. 2, umfasst jede der beiden elektrohydraulischen Antriebseinheiten 6 eine doppeltwirkende hydraulische Zylinder-Kolben-Anordnung 7, eine Motor-Pumpe-Einheit 8 mit einer von einem Elektromotor 9 angetriebenen Hydraulikpumpe 10 und einen Hydraulikflüssigkeitsbehälter 11. Die hydraulische Zylinder-Kolben-Anordnung 7 ist stehend angeordnet mit einem fest mit dem zugeordneten C-Rahmen 1 verbundenen Zylinder 12 und einem nach unten aus diesem herausragenden Kolben 13, mit dem das obere Werkzeug 3 gekoppelt ist.

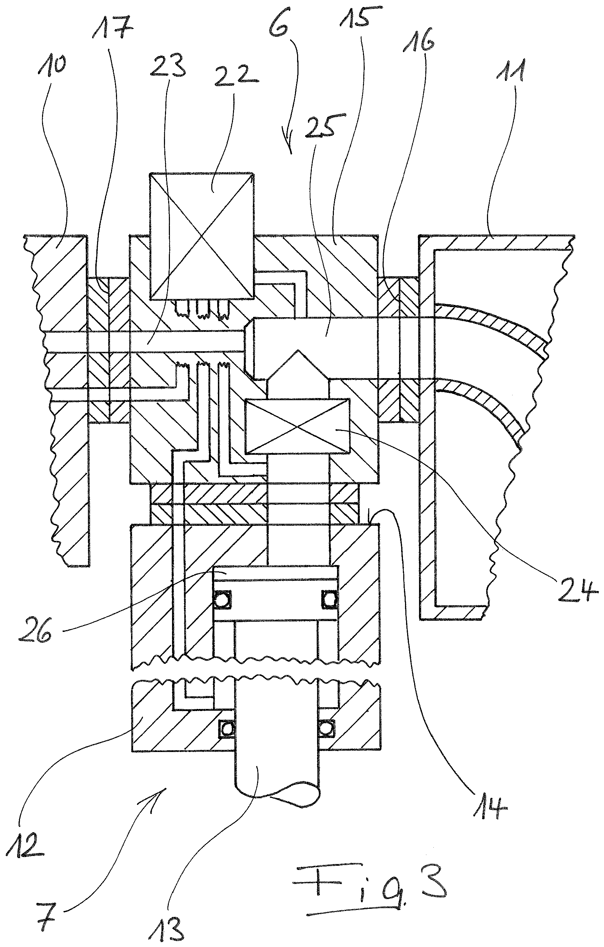

An den Zylinder 12 der hydraulischen Zylinder-Kolben-Anordnung 7 ist oben, an dessen oberer Stirnfläche 14 ein Ventilblock 15 mit einem Nachsaugventil angeflanscht. Der Ventilblock 15 weist mehrere flanschartige hydraulische Schnittstellen auf. Eine erste hydraulische Schnittstelle 16, die in Form eines SAE-Flansches ausgeführt ist, dient dem Anschluss des Hydraulikflüssigkeitsbehälters 11; dieser ist an der ersten hydraulischen Schnittstelle 16 an den Ventilblock 15 angeflanscht. Der ersten hydraulischen Schnittstelle 16 gegenüberliegend weist der Ventilblock 15 eine zweite hydraulische Schnittstelle 17 auf, die dem Anschluss der Motor-Pumpe-Einheit 8 dient. Die Hydraulikpumpe 10 der Motor-Pumpe-Einheit 8 ist, dem Hydraulikflüssigkeitsbehälter 11 gegenüberliegend, an der zweiten hydraulischen Schnittstelle 17 des Ventilblocks 15 an diesen angeflanscht. Eine an einer weiteren Seite des Ventilblocks 15 angeordnete dritte hydraulische Schnittstelle 18 dient dem Anschluss eines Funktionsblocks 19 mit weiteren, von einer Maschinensteuerung ansteuerbaren Hydraulikventilen an den Ventilblock 15; der Funktionsblock ist an der dritten hydraulischen Schnittstelle 18 des Ventilblocks 15 an diesen angeflanscht. Weitere, von einer Maschinensteuerung ansteuerbare Hydraulikventile sind, wie beispielhaft durch das die Beaufschlagung der beiden Arbeitsräume der Zylinder-Kolben-Anordnung 7 durch die Motor-Pumpe-Einheit 8 bewirkende Steuerventil 22 (Fig. 3) veranschaulicht, in dem Ventilblock 15 selbst untergebracht.

Durch den Ventilblock 15 hindurch, von der ersten hydraulischen Schnittstelle 16 bis zur zweiten hydraulischen Schnittstelle 17, erstreckt sich eine Saugleitung 23, über die die Hydraulikpumpe 10 im Pumpbetrieb Hydraulikflüssigkeit aus dem Hydraulikflüssigkeitsbehälter 11 ansaugt. Die Saugleitung 23 ist abschnittsweise, nämlich in dem sich an die erste hydraulische Schnittstelle 16 anschließenden ersten Bereich, mit der (auch das Nachsaugventil 24 umfassenden) Nachsaugleitung 25 identisch, welche ebenfalls den Ventilblock 15 durchsetzt, nämlich von der ersten hydraulischen Schnittstelle 16 bis zu der mit dem Zylinder 12 der doppeltwirkenden hydraulischen Zylinder-Kolben-Anordnung 7 verbundenen Flanschfläche - und sich von dort weiter durch den Zylinder 12 hindurch bis zu dem kolbenseitigen Arbeitsraum 26 der Zylinder-Kolben-Anordnung 7 erstreckt.

Die vorstehend erläuterten Komponenten der elektrohydraulischen Antriebseinheit 6 sind dabei so dimensioniert und relativ zueinander angeordnet, dass weder die maximale Bauhöhe der Motor-Pumpe-Einheit 8, noch die maximale Bauhöhe des Hydraulikflüssigkeitsbehälters 11 die Bauhöhe des Ventilblocks 15 übersteigt. Hierzu trägt eine liegende Einbaulage der Motor-Pumpe-Einheit 8 bei; d. h. die Motor-Pumpe-Einheit ist liegend orientiert mit waagerechter Achse des neben der Hydraulikpumpe 10 angeordneten Elektromotors 9.

Die Motor-Pumpe-Einheit umfasst im Übrigen einen Adapterflansch 20. Dieser ist zwischen dem Pumpengehäuse 21 der Hydraulikpumpe 10 und dem Elektromotor 9 angeordnet, so dass der Elektromotor 9 nicht direkt und unmittelbar mit dem Pumpengehäuse 21 verbunden ist, sondern vielmehr mittelbar über den besagten Adapterflansch 20. In dem Pumpengehäuse 21 der Hydraulikpumpe 10 ist an geeigneter Stelle eine Aufnahme für einen Druckfilter ausgeführt, welcher auf der Druckseite der Hydraulikpumpe 10 ständig die durch diese geförderte Hydraulikflüssigkeit reinigt.

Allein um einer Fehlinterpretation der vorstehenden Erläuterung eines bevorzugten Ausführungsbeispiels der Erfindung vorzubeugen, wird darauf hingewiesen, dass die Erfindung auch solche Bearbeitungsmaschinen umfasst, die mit nur einer elektrohydraulischen Antriebseinheit 6 des hier maßgeblichen Aufbaus ausgestattet sind.

## Patentansprüche

1. Bearbeitungsmaschine mit mindestens einem im Wesentlichen vertikal auf und ab bewegbaren Werkzeug (3), auf das mindestens eine elektrohydraulische Antriebseinheit (6) wirkt, umfassend
- eine stehend orientierte, doppeltwirkende hydraulische Zylinder-Kolben-Anordnung (7) mit einem nach unten aus dem Zylinder (12) herausragenden, mit dem Werkzeug (3) gekoppelten Kolben (13),
- einen Hydraulikflüssigkeitsbehälter (11),
- eine Motor-Pumpe-Einheit (8) mit einem Elektromotor (9) und einer von diesem angetriebenen Hydraulikpumpe (10),
- und ein am oberen Endbereich des Zylinders (12) an dem Zylinder (12) angeflanschten Ventilblock (15) mit einem Nachsaugventil (24),
**dadurch gekennzeichnet,**
**dass** an den Ventilblock (15) an einer ersten hydraulischen Schnittstelle (16) der Hydraulikflüssigkeitsbehälter (11) und an einer zweiten hydraulischen Schnittstelle (17) die Hydraulikpumpe (10) angeflanscht sind, wobei sich eine Saugleitung (23), über die die Hydraulikpumpe (10) im Pumpbetrieb Hydraulikflüssigkeit aus dem Hydraulikflüssigkeitsbehälter (11) ansaugt, von der ersten hydraulischen Schnittstelle (16) zur zweiten hydraulischen Schnittstelle (17) durch den Ventilblock (15) hindurch erstreckt, wobei die Saugleitung (23) abschnittsweise identisch ist mit einer den Ventilblock (15) durchsetzenden, den Hydraulikflüssigkeitsbehälter (11) mit einem kolbenseitigen Arbeitsraum (26) der doppeltwirkenden hydraulischen Zylinder-Kolben-Anordnung (7) verbindenden Nachsaugleitung (25).

2. Bearbeitungsmaschine nach Anspruch 1, **dadurch gekennzeichnet, dass** die erste und die zweite hydraulische Schnittstelle (16, 17) einander dergestalt gegenüberliegen, dass der Hydraulikflüssigkeitsbehälter (11) und die Hydraulikpumpe (10) einander gegenüberliegend an den Ventilblock (15) angeflanscht sind.

3. Bearbeitungsmaschine nach Anspruch 1, **dadurch gekennzeichnet, dass** der Hydraulikflüssigkeitsbehälter (11) und die Hydraulikpumpe (10) über Eck an den Ventilblock (15) angeflanscht sind.

4. Bearbeitungsmaschine nach einem der Ansprüche 1 bis 3, **dadurch gekennzeichnet, dass** die erste Schnittstelle (16) als SAE-Flansch ausgeführt ist.

5. Bearbeitungsmaschine nach einem der Ansprüche 1 bis 4, **dadurch gekennzeichnet, dass** die maximale Bauhöhe der Motor-Pumpe-Einheit (8) die Bauhöhe des Ventilblocks (15) nicht übersteigt.

6. Bearbeitungsmaschine nach einem der Ansprüche 1 bis 5, **dadurch gekennzeichnet, dass** die maximale Bauhöhe des Hydraulikflüssigkeitsbehälters (11) die Bauhöhe des Ventilblocks (15) nicht übersteigt.

7. Bearbeitungsmaschine nach einem der Ansprüche 1 bis 6, **dadurch gekennzeichnet, dass** weitere, von einer Maschinensteuerung ansteuerbare Hydraulikventile in dem Ventilblock (15) untergebracht sind.

8. Bearbeitungsmaschine nach einem der Ansprüche 1 bis 7, **dadurch gekennzeichnet, dass** weitere, von einer Maschinensteuerung ansteuerbare Hydraulikventile in dem Pumpengehäuse (21) der Hydraulikpumpe (10) untergebracht sind.

9. Bearbeitungsmaschine nach einem der Ansprüche 1 bis 8, **dadurch gekennzeichnet, dass** an den Ventilblock (15) an einer dritten hydraulischen Schnittstelle (18) ein Funktionsblock (19) mit weiteren, von einer Maschinensteuerung ansteuerbaren Hydraulikventilen angeflanscht ist.

10. Bearbeitungsmaschine nach einem der Ansprüche 1 bis 9, **dadurch gekennzeichnet, dass** die Motor-Pumpe-Einheit (8) liegend orientiert ist mit waagerechter Achse des neben der Hydraulikpumpe (10) angeordneten Elektromotors (9).

11. Bearbeitungsmaschine nach einem der Ansprüche 1 bis 9, **dadurch gekennzeichnet, dass** die Motor-Pumpe-Einheit (8) stehend orientiert ist mit senkrechter Achse des unterhalb der Hydraulikpumpe (10) angeordneten Elektromotors (9).

12. Bearbeitungsmaschine nach einem der Ansprüche 1 bis 11, **dadurch gekennzeichnet, dass** die Motor-Pumpe-Einheit (8) einen zwischen dem Pumpengehäuse (21) der Hydraulikpumpe (10) und dem Elektromotor (9) angeordneten Adapterflansch (20) umfasst.

13. Bearbeitungsmaschine nach einem der Ansprüche 1 bis 12, **dadurch gekennzeichnet, dass** in dem Pumpengehäuse (21) der Hydraulikpumpe (10) ein Druckfilter für die geförderte Hydraulikflüssigkeit untergebracht ist.

## Claims

1. Processing machine with at least one tool (3) which can be moved up and down substantially vertically and on which at least one electrohydraulic drive unit (6) acts, comprising
- a vertically oriented, double-acting hydraulic cylinder-piston arrangement (7) with a piston (13) protruding downwards from the cylinder (12) and coupled to the tool (3),
- a hydraulic fluid reservoir (11),
- a motor-pump unit (8) with an electric motor (9) and one
- hydraulic pump (10) driven therefrom,
- and a valve block (15) flanged to the cylinder (12) at the upper end region of the cylinder (12) with a sucking valve (24),
**characterized in that**
the hydraulic fluid reservoir (11) is flanged to the valve block (15) at a first hydraulic interface (16) and the hydraulic pump (10) is flanged to the valve block (15) at a second hydraulic interface (17), a suction line (23), via which the hydraulic pump (10) sucks hydraulic fluid from the hydraulic fluid reservoir (11) during pumping operation, extends through the valve block (15) from the first hydraulic interface (16) to the second hydraulic interface (17), the suction line (23) being identical in sections to a suction line (25) which passes through the valve block (15) and connects the hydraulic fluid reservoir (11) to a piston-side working chamber (26) of the double-acting hydraulic cylinder-piston arrangement (7).

2. Processing machine according to claim 1, **characterised in that** the first and the second hydraulic interface (16, 17) lie opposite one another in such a way that the hydraulic fluid reservoir (11) and the hydraulic pump (10) are flanged to the valve block (15) opposite one another.

3. Processing machine according to claim 1, **characterised in that** the hydraulic fluid reservoir (11) and the hydraulic pump (10) are flanged to the valve block (15) over corner.

4. Processing machine according to one of claims 1 to 3, **characterised in that** the first interface (16) is designed as an SAE flange.

5. Processing machine according to one of claims 1 to 4, **characterised in that** the maximum overall height of the motor-pump unit (8) does not exceed the overall height of the valve block (15).

6. Processing machine according to one of claims 1 to 5, **characterised in that** the maximum overall height of the hydraulic fluid reservoir (11) does not exceed the overall height of the valve block (15).

7. Processing machine according to one of claims 1 to 6, **characterised in that** further hydraulic valves which can be controlled by a machine control system are disposed in the valve block (15).

8. Processing machine according to one of claims 1 to 7, **characterised in that** further hydraulic valves which can be controlled by a machine control system are disposed in the pump housing (21) of the hydraulic pump (10).

9. Processing machine according to one of claims 1 to 8, **characterised in that** a function block (19) with further hydraulic valves which can be controlled by a machine control system is flanged to the valve block (15) at a third hydraulic interface (18).

10. Processing machine according to one of claims 1 to 9, **characterized in that** the motor-pump unit (8) is oriented horizontally with a horizontal axis of the electric motor (9), the electric motor (9) being arranged next to the hydraulic pump (10).

11. Processing machine according to one of claims 1 to 9, **characterized in that** the motor-pump unit (8) is oriented vertically with a vertical axis of the electric motor (9), the electric motor (9) being arranged below the hydraulic pump (10).

12. Processing machine according to any one of claims 1 to 11, **characterised in that** the motor-pump unit (8) comprises an adapter flange (20) arranged between the pump housing (21) of the hydraulic pump (10) and the electric motor (9).

13. Processing machine according to one of claims 1 to 12, **characterised in that** a pressure filter for the pumped hydraulic fluid is disposed in the pump housing (21) of the hydraulic pump (10).

## Revendications

1. Machine-outil comprenant au moins un outil (3) qui est apte à effectuer un mouvement de va-et-vient sensiblement vertical et sur lequel agit une unité d'entraînement électro-hydraulique (6), comportant
un ensemble hydraulique (7) vérin-piston à double effet orienté verticalement et comprenant un piston (13) qui est couplé audit outil (3) et qui dépasse le vérin vers le bas,
un réservoir (11) de fluide hydraulique,
un ensemble (8) moteur-pompe comprenant un moteur électrique (9) et une pompe hydraulique (10) entraînée par celui-ci, et
un bloc (15) de valves qui est bridé au vérin (12) dans la partie d'extrémité supérieure de celui-ci et qui comporte une valve anti-cavitation (24),
**caractérisée en ce que**
audit bloc (15) de valves sont bridés ledit réservoir (11) de fluide hydraulique au niveau d'une première jonction hydraulique (16) et ladite pompe hydraulique (10) au niveau d'une deuxième jonction hydraulique (17), un conduit d'aspiration (23), par voie de laquelle la pompe hydraulique (10) aspire du fluide hydraulique dudit réservoir (11) de fluide hydraulique lors de l'opération de la pompe, s'étendant de ladite première jonction hydraulique (16) à ladite deuxième jonction hydraulique (17) à travers le bloc (15) de valves, ledit conduit d'aspiration (23) étant partiellement identique avec un conduit anti-cavitation (25) qui s'étend à travers ledit bloc (15) de valves et qui raccorde ledit réservoir (11) de fluide hydraulique avec un espace de travail (26) dudit ensemble hydraulique (7) vérin-piston à double effet.

2. Machine-outil selon la revendication 1, **caractérisée en ce que** ladite première et ladite deuxième jonction hydraulique (16, 17) sont opposées l'une à l'autre de façon que ledit réservoir (11) de fluide hydraulique et ladite pompe hydraulique (10) sont bridés audit bloc (15) de valves en étant opposés l'un à l'autre.

3. Machine-outil selon la revendication 1, **caractérisée en ce que** ledit réservoir (11) de fluide hydraulique et ladite pompe hydraulique (10) sont bridés audit bloc (15) de valves en étant arrangés en angle.

4. Machine-outil selon l'une quelconque des revendications 1 à 3, **caractérisée en ce que** ladite première jonction hydraulique (16) est réalisée sous forme d'une bride SAE.

5. Machine-outil selon l'une quelconque des revendications 1 à 4, **caractérisée en ce que** la hauteur maximale de l'ensemble (8) moteur-pompe n'est pas supérieur à la hauteur maximale dudit bloc (15) de valves.

6. Machine-outil selon l'une quelconque des revendications 1 à 5, **caractérisée en ce que** la hauteur maximale dudit réservoir (11) de fluide hydraulique n'est pas supérieur à la hauteur maximale dudit bloc (15) de valves.

7. Machine-outil selon l'une quelconque des revendications 1 à 6, **caractérisée en ce que**, dans ledit bloc (15) de valves, d'autre valves hydrauliques sont logées qui sont apte à être commandées par un contrôle machine.

8. Machine-outil selon l'une quelconque des revendications 1 à 7, **caractérisée en ce que**, dans le boîtier (21) de la pompe hydraulique (10), d'autre valves hydrauliques sont logées qui sont apte à être commandées par un contrôle machine.

9. Machine-outil selon l'une quelconque des revendications 1 à 8, **caractérisée en ce que**, au niveau d'une troisième jonction hydraulique (18), un bloc fonctionnel (19) est bridé audit bloc (15) de valves, ledit bloc fonctionnel comprenant d'autre valves hydrauliques apte à être commandées par un contrôle machine.

10. Machine-outil selon l'une quelconque des revendications 1 à 9, **caractérisée en ce que** ledit ensemble (8) moteur-pompe est orienté horizontalement, l'axe du moteur électrique (9), qui est situé à côté de ladite pompe hydraulique (10), s'étendant horizontalement.

11. Machine-outil selon l'une quelconque des revendications 1 à 9, **caractérisée en ce que** ledit ensemble (8) moteur-pompe est orienté verticalement, l'axe du moteur électrique (9), qui est situé en dessous de ladite pompe hydraulique (10), s'étendant verticalement.

12. Machine-outil selon l'une quelconque des revendications 1 à 11, **caractérisée en ce que** ledit ensemble (8) moteur-pompe comprend une bride adaptatrice (20) disposée entre le boîtier (21) de la pompe, la pompe hydraulique (10), et le moteur électrique (9).

13. Machine-outil selon l'une quelconque des revendications 1 à 12, **caractérisée en ce qu'**un filtre sous pression pour le fluide hydraulique en circulation est logé dans le boîtier (21) de la pompe hydraulique (10).
